(19) Europäisches Patentamt
European Patent Office
Office européen des brevets

(11) Veröffentlichungsnummer: **0 012 411**
**B1**

(12) **EUROPÄISCHE PATENTSCHRIFT**

(45) Veröffentlichungstag der Patentschrift: **18.05.83**

(51) Int. Cl.³: **C 09 B 62/06**, D 06 P 3/66, D 06 P 3/10

(21) Anmeldenummer: **79105041.2**

(22) Anmeldetag: **10.12.79**

(54) **Anthrachinon-Reaktivfarbstoffe sowie deren Verwendung zum Färben von OH- oder amidgruppenhaltigen Materialien.**

(30) Priorität: **16.12.78 DE 2854481**

(43) Veröffentlichungstag der Anmeldung:
**25.06.80 Patentblatt 80/13**

(45) Bekanntmachung des Hinweises auf die Patenterteilung:
**18.05.83 Patentblatt 83/20**

(84) Benannte Vertragsstaaten:
**CH DE FR GB**

(56) Entgegenhaltungen:
**CH - A - 471 207**
**FR - A - 2 370 781**
**FR - A - 2 403 367**

(73) Patentinhaber: **BAYER AG**
**Zentralbereich Patente, Marken und Lizenzen**
**D-5090 Leverkusen 1, Bayerwerk (DE)**

(72) Erfinder: **Harms, Wolfgang, Dr.**
**Walter-Flex-Strasse 21**
**D-5090 Leverkusen (DE)**
Erfinder: **Wunderlich, Klaus, Dr.**
**Carl-Rumpff-Strasse 21**
**D-5090 Leverkusen (DE)**
Erfinder: **Von Oertzen, Klaus, Dr.**
**Hahnenweg 8**
**D-5000 Köln 80 (DE)**

**Die Akte enthält technische Angaben, die nach dem Eingang der Anmeldung eingereicht wurden und die nicht in dieser Patentschrift enthalten sind.**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Anthrachinon-Reaktivfarbstoffe sowie deren Verwendung zum Färben von OH— oder amidgruppenhaltigen Materialien

Gegenstand der vorliegenden Erfindung sind Reaktivfarbstoffe der Formel

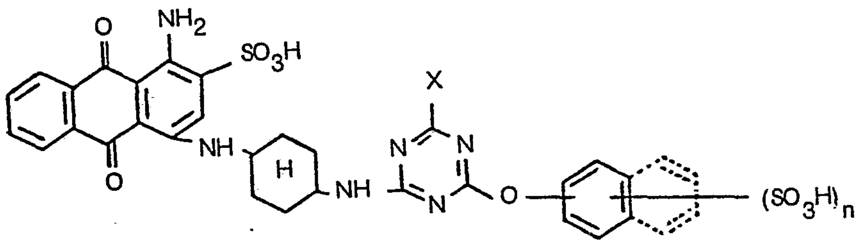

(I)

wobei
X = F, Cl oder Br und
n = 1, 2 oder 3.
Geeignete Substituenten

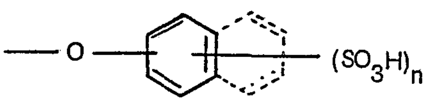

sind zum Beispiel:

2-, 3- oder 4-Sulfophenoxy, 2,4-Disulfophenoxy, 2-, 3-, 4-, 5-, 6-, 7- oder 8-Sulfo-1-naphthoxy, 4-, 5-, 6-, 7- oder 8-Sulfo-2-naphthoxy, 2,5-Disulfo-1-naphthoxy, 3,6-Disulfo-1-naphthoxy, 3,7-Disulfo-1-naphthoxy, 3,8-Disulfo-1-naphthoxy, 4,8-Disulfo-1-naphthoxy, 3,6-Disulfo-2-naphthoxy, 3,7-Disulfo-2-naphthoxy, 4,8-Disulfo-2-naphthoxy, 5,7-Disulfo-2-naphthoxy, 6,8-Disulfo-2-naphthoxy, 3,6,8-Trisulfo-1-naphthoxy, 3,6,8-Trisulfo-2-naphthoxy.

Aus CH—A 471 207 sind Farbstoffe mit analogem chromophorem Teil, aber anderen Reaktivgruppen als Halogentriazinyl bekannt.

FR—A 2 370 781 offenbart ähnliche Reaktivfarbstoffe wie die vorliegende Patentanmeldung, wobei jedoch an Stelle der Aryloxygruppen Aminosubstituenten am Halogentriazinylring des Reaktivfarbstoffmoleküls zu finden sind.

Die neuen Farbstoffe werden erhalten, indem man die Aminocyclohexylverbindungen der Formel

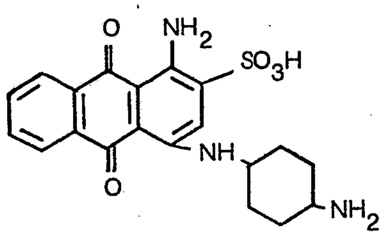

(II)

mit Trihalogentriazinen im Molverhältnis 1:1 kondensiert und die erhaltenen Verbindungen der Formel

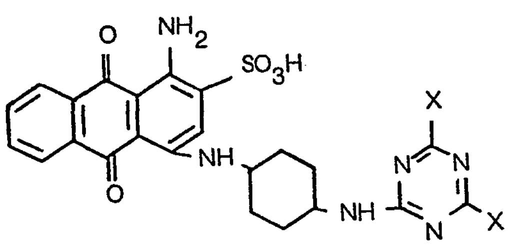

(III)

worin X die oben angegebene Bedeutung hat, mit Phenolen oder Naphtholen der Formel

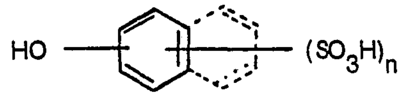

(IV)

worin n die oben angegebene Bedeutung besitzt, umsetzt.

Eine Variante zur Herstellung von Farbstoffen der Formel (I) besteht in der Kondensation der Aminocyclohexylaminoverbindungen der Formel (II) mit Dihalogentriazinylverbindungen der Formel

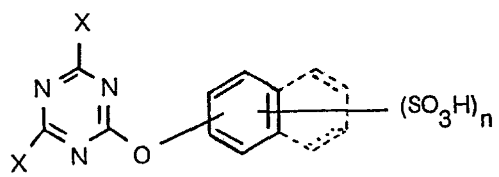

(V)

worin n und X die oben angegebene Bedeutung haben.

Die Kondensation der Aminocyclohexylaminooverbindung II mit den Trihalogentriazinen wird in wäßrigem oder wäßrigorganischen Medium bei Temperaturen von 0—50°, vorzugsweise 0—30°, und pH-Werten von 5—11, vorzugsweise 6—10, die Kondensation der Dihalogentriazinyl-anthrachinon-verbindungen der Formel (III) mit den Verbindungen der Formel (IV) bei Temperaturen von 0—80°C, vorzugsweise 0—60°, und pH-Werten von 4—11, vorzugsweise 5—9, in Gegenwart alkalischer Mittel, wie wäßrigen Alkalihydroxid-, Alkalicarbonat- oder Alkaliphosphatlösungen, durchgeführt.

Die Umsetzung der Aminocyclohexylaminoanthrachinonverbindung der Formel (II) mit 6-substituierten 2,4-Dihalogentriazinen der Formel (V) wird in wäßrigen oder wäßrig-organischem Medium bei Temperaturen von 0—80°C, vorzugsweise bei 0—50°C, und pH-Werten von 5—12, vorzugsweise 7—11, in Gegenwart alkalischer Mittel durchgeführt.

Die neuen Farbstoffe sind äußerst wertvolle Produkte, die sich für verschiedenste Anwendungszwecke eignen. Als wasserlösliche Verbindungen finden sie bevorzugtes Interesse für das Färben hydroxylgruppenhaltiger und stickstoffhaltiger Textilmaterialien, insbesondere von Textilmaterialien aus nativer und regenerierter Cellulose, ferner aus Wolle, Seide, synthetischen Polyamid- und Polyurethanfasern.

Die genannten Materalien werden nach den für Reaktivfarbstoffe üblichen Verfahren gefärbt oder bedruckt. Man erhält licht- und naßechte brillante blaue Färbungen und Drucke.

Bei Temperaturangaben in den Beispielen handelt es sich um °C. Die Formeln der Farbstoffe in der Beschreibung und den Beispielen sind die der freien Säuren. Die Farbstoffe werden im allgemeinen in Form ihrer Alkalisalze, insbesondere der Natrium- oder Kaliumsalze, isoliert und angewendet.

## Beispiel 1

A. 12,0 g 1-Amino-4-(4′-amino-cyclohexylamino)-anthrachinon-2-sulfonsäure werden in 240 ml Wasser und 18,1 ml 2 n Natronlauge bei 60°C gelöst. Man kühlt die Lösung auf 20°C ab. 6,4 g Cyanurchlorid werden in 30 ml Aceton gelöst und auf 30 g Eis gegeben. Zu der erhaltenen Cyanurchloridsuspension läßt man die alkalische Lösung der Anthrachinonkomponente bei 0—5°C so zutropfen, daß sich im Reaktionsgemisch ein pH-Wert von 8,0—8,5 einstellt. Nach dem Eintropfen rührt man noch 2 Stunden nach, bis die Kondensation beendet ist.

B. Man erwärmt nun die Lösung der Dichlortriazinyl-anthrachinonverbindung auf 30—35°C und läßt bei dieser Temperatur eine auf pH 9 gestellte Lösung von 6,0 g Phenol-3-sulfonsäure in 80 ml Wasser in 30 Minuten zutropfen. Zur Kondensation hält man den pH-Wert bei 8,5-9,0 mittels 2n Natronlauge. Nach dem Eintropfen der Phenolsulfonsäure steigert man zur Beendigung der Umsetzung die Temperatur auf 40—45°C. Nach etwa 2—3 Stunden ist die Reaktion abgeschlossen. Man kühlt auf 20°C und läßt die Farbstofflösung in ein gleiches Volumen 25 %iger Natriumchloridlösung einlaufen und fügt noch so viel Natriumchlorid hinzu, daß eine etwa 20 %ige Lösung bezüglich Natriumchlorid entsteht. Der ausgefallene Farbstoff der Formel

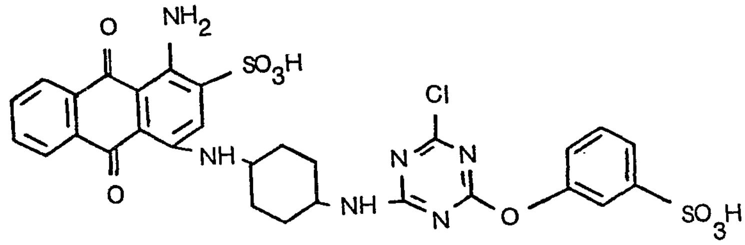

wird abgesaugt, mit 20 %iger Natriumchloridlösung gewaschen und bei 50° im Vakuum getrocknet.

C. Man bedruckt Cellulosegewebe mit einer Druckpaste, die im Kilogramm 40 g des obigen Farbstoffes, 100 g Harnstoff, 300 ml Wasser, 500 g Alginatverdickung sowie 20 g Soda enthält und die mit Wasser auf 1 Kilogramm aufgefüllt wurde, trocknet, dämpft 2 Minuten bei 105°C, spült mit heißem

Wasser und seift anschließend kochend, spült und trocknet. Auf diese Weise wird ein brillanter, blauer Druck mit sehr guter Licht- und Naßechtheit erhalten.

D. Zur Färbung werden 50 g Baumwollstrang in 1 Liter Färbeflotte, die 1,5 g obigen Farbstoffes enthält, gefärbt, indem man innerhalb von 30 Minuten auf 50° heizt, 50 g Natriumsulfat in mehreren Anteilen zugibt, anschließend 20 g Soda zufügt und 60 Min. bei dieser Temperatur behandelt. Nach dem Spülen, kochenden Seifen und Trocknen erhält man eine brillante, blaue Färbung mit ausgezeichneten Licht- und Naßechtheiten.

Beispiel 2

A. 6,4 g Cyanurchlorid werden feinst gemahlen und in 70 ml Eiswasser suspendiert. Zu der Suspension läßt man bei 0—5° eine Lösung von 12,0 g 1-Amino-4-(4'-amino-cyclohexylamino)-anthrachinon-2-sulfonsäure in 250 ml Wasser und 18,1 ml 2n Natronlauge so zutropfen, daß der pH-Wert im Reaktionsgemisch sich auf 8,3—8,7 einstellt. Man rührt mehrere Stunden unter den angegebenen Bedingungen nach, bis die Umsetzung beendet ist.

B. Man erwärmt die erhaltene Lösung auf 35°C und gibt innerhalb 20 Minuten eine auf pH 9 gestellte Lösung von 6,2 g Phenol-4-sulfonsäure in 40 ml Wasser hinzu. Anschließend steigert man die Temperatur auf 45°C. Während und nach der Zugabe der Phenol-sulfonsäure hält man den pH-Wert mittels 2n Natronlauge auf 8,5-8,8. Man rührt noch etwa 5—6 Stunden bis zum restlosen Verschwinden der Dichlortriazinylanthrachinonverbindung nach.

Anschließend wird die erhaltene Lösung in das 1,5-fache Volumen 25 %iger Natriumchloridlösung eingetropft, der ausgefallene Farbstoff mit 15 %iger Natriumchloridlösung gewaschen und bei 50° im Vakuum getrocknet. Die erhaltene Farbstoff entspricht der Formel

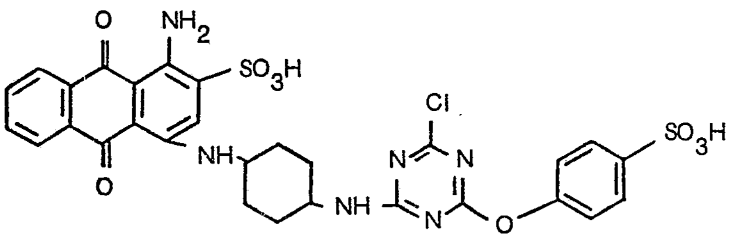

und gibt auf Baumwolle oder Zellwolle nach dem Verfahren des Beispiels 1 C billante, blaue Drucke mit ausgezeichneten Licht- und Naßechtheiten.

C. Zur Färbung von Cellulosematerialien kann man folgendermaßen verfahren:

100 g Baumwollgewebe werden mit einer wäßrigen Lösung, die 3% des Farbstoffes, 15 g/ltr. Natriumhydrogencarbonat und 150 g/ltr. Harnstoff enthält, foulardiert, zwischengetrocknet, 2 Minuten auf 140°C erhitzt, danach gespült und kochend geseift. Das Gewebe wird in brillanten, sehr licht- und naßechten Blautönen gefärbt.

Anstatt das zwischengetrocknete Gewebe auf 140°C zu erhitzen, kann man es auch bei 105°C 2 Minuten dämpfen, um ähnliche Färbungen zu erhalten.

Einen ähnlichen Farbstoff erhält man, wenn man in Beispiel 2 A anstelle des Cyanurchlorids eine äquivalente Menge Cyanurbromid einsetzt.

Beispiel 3

A. 13,2 g 1-Amino-4-(4'-amino-cyclohexylamino)-anthrachinon-2-sulfonsäure werden in der im Beispiel 1 A beschriebenen Weise mit 7,05 g Cyanurchlorid bei 0—5° und pH 8,0—8,5 umgesetzt.

B. Zur erhaltenen Lösung der Dichlortriazinylanthrachinonverbindung läßt man bei 35° eine auf pH 9 gestellte Lösung von 11,6 g 2-Naphthol-6,8-disulfonsäure in 140 ml Wasser zutropfen und hält dabei den pH-Wert auf 9,0—9,2. Anschließend steigert man die Temperatur auf 40—45°C und rührt bis zur Beendigung der Kondensation weiter. Der Farbstoff wird bei 20°C mit 22% Natriumchlorid ausgesalzen, abgesaugt, mit 25 %iger Natriumchloridlösung gewaschen und bei 50° im Vakuum getrocknet. Er entspricht der Formel

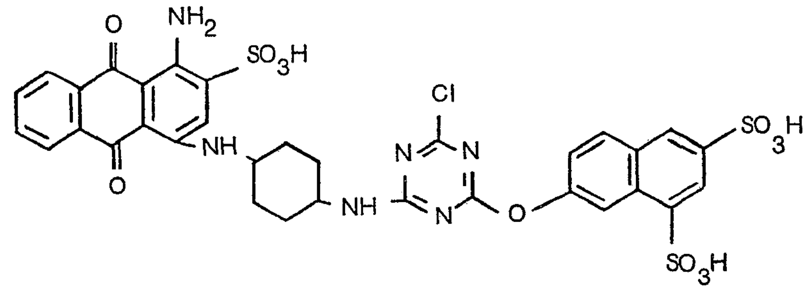

und gibt auf Cellulosegewebe nach dem Verfahren des Beispiels 1 A brillante blaue Drucke mit sehr guten Naßechtheitseigenschaften.

Einen ähnlichen Farbstoff erhält man, wenn man an Stelle des Cyanurchlorids eine äquivalente Menge Cyanurbromid einsetzt.

Beispiel 4

A. 12,0 g 1-Amino-4-(4'-amino-cyclohexylamino)-anthrachinon-2-sulfonsäure werden, wie im Beispiel 1 A beschrieben, mit einer Suspension von 6,4 g Cyanurchlorid bei 0—5° und pH 8,0—8,5 zur Reaktion gebracht.

B. Zur erhaltenen Lösung der Dichlortriazinylanthrachinonverbindung läßt man bei 35°C eine auf pH 8,5 gestellte Lösung von 10,5 g 1-Naphthol-3,7-disulfonsäure in 80 ml Wasser in 30 Minuten zulaufen und hält den pH-Wert auf 8,5—8,8. Nach dem Eintropfen führt man die Kondensation bei 40—45° in etwa 5 Stunden zu Ende. Man kühlt auf 20° ab und salzt aus der Lösung den Farbstoff mit 15% Natriumchlorid aus. Der Niederschlag wird abgesaugt, der Filterkuchen mit 15 %iger Natriumchloridlösung gewaschen und bei 50° im Vakuum getrocknet.

Der erhaltene Farbstoff entspricht der Formel

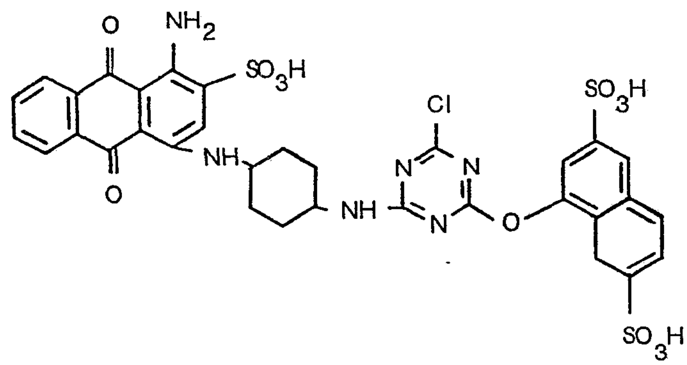

Mit ihm lassen sich nach den angegebenen Verfahren brillante, blaue Drucke und Färbungen mit ausgezeichneten Licht- und Naßechtheiten erhalten.

In analoger Weise erhält man weitere Reaktivfarbstoffe, mit denen sich Cellulosegewebe in brillanten Blautönen bedrucken oder färben lassen, wenn man an Stelle der 1-Naphthol-3,7-disulfonsäure folgende Phenol- oder Naphthol-sulfonsäuren als Kondensationskomponente einsetzt:

| Nr. | Kondensationskomponente |
|---|---|
| 5 | Phenol-2,4-disulfonsäure |
| 6 | 1-Naphthol-4-sulfonsäure |
| 7 | 1-Naphthol-5-sulfonsäure |
| 8 | 1-Naphthol-6-sulfonsäure |
| 9 | 1-Naphthol-7-sulfonsäure |
| 10 | 1-Naphthol-8-sulfonsäure |
| 11 | 1-Naphthol-3,6-disulfonsäure |
| 12 | 1-Naphthol-3,8-disulfonsäure |
| 13 | 1-Naphthol-4,8-disulfonsäure |
| 14 | 1-Naphthol-3,6,8-trisulfonsäure |
| 15 | 2-Naphthol-4-sulfonsäure |
| 16 | 2-Naphthol-6-sulfonsäure |
| 17 | 3-Naphthol-7-sulfonsäure |
| 18 | 2-Naphthol-5-sulfonsäure |

19 2-Naphthol-8-sulfonsäure
20 2-Naphthol-3,7-disulfonsäure
21 2-Naphthol-3,6-disulfonsäure
22 2-Naphthol-4,8-disulfonsäure
23 2-Naphthol-5,7-disulfonsäure
24 2-Naphthol-3,6,8-trisulfonsäure

Beispiel 25

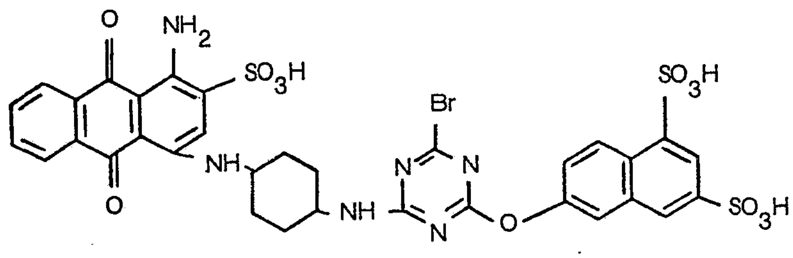

Der Farbstoff gibt auf Baumwolle klare blaue Färbungen und Drucke mit sehr guten Eigenschaften.

Setzt man als Reaktivkomponente die Verbindung der Formel

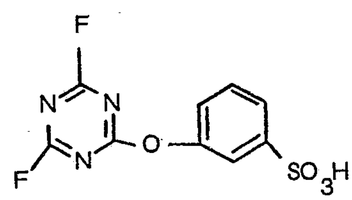

ein, so erhält man ebenfalls einen Reaktivfarbstoff, der auf Cellulosefasern klare, blaue Färbungen und Drucke ergibt.

**Patentansprüche**

1. Farbstoffe der Formel

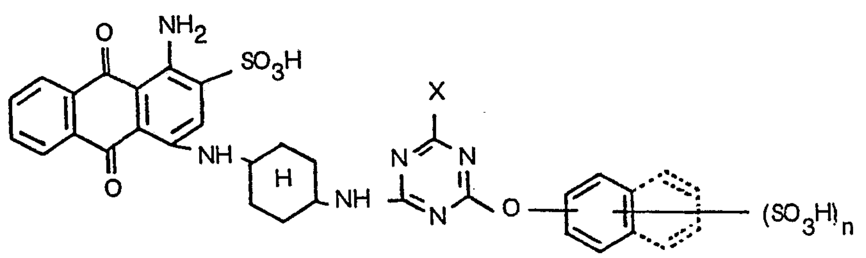

(I)

worin

X = F, Cl oder Br und
n = 1, 2 oder 3.

2. Verwendung der Farbstoffe des Anspruchs 1) zum Färben und Bedrucken von hydroxylgruppen- oder amidgruppenhaltigen Fasermaterialien.

## Claims

1. Dyestuffs of the formula

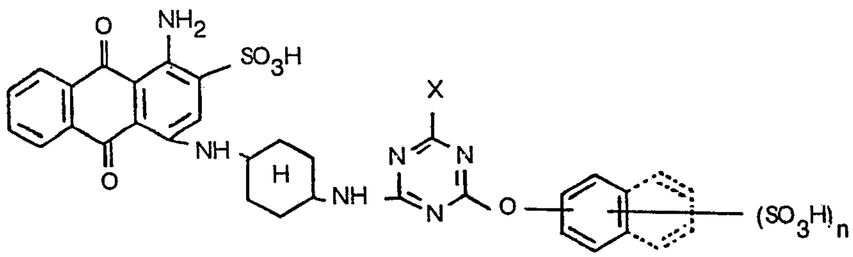

(I)

wherein

X = F, Cl or Br and

n = 1, 2 or 3.

2. Use of the dyestuffs of Claim 1) for dyeing and printing fibre materials containing hydroxyl groups or amide groups.

## Revendications

1. Colorants de formule

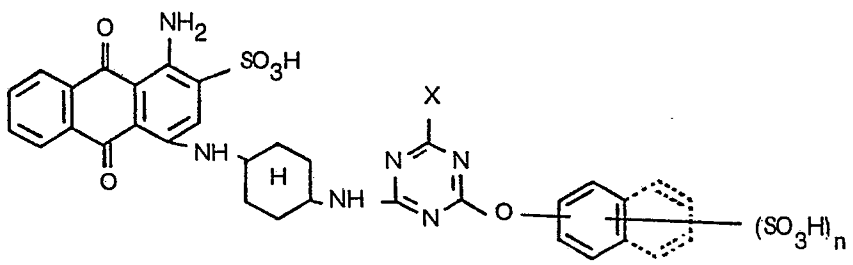

(I)

dans laquelle

X = F, Cl ou Br et

n = 1, 2 or 3.

2. Utilisation des colorants suivant la revendication 1 pour la teinture et l'impression de matières fibreuses, contenant des groupes hydroxyl ou des groupes amide.